# EUROPEAN PATENT APPLICATION

(11) **EP 4 425 391 A1**
(43) Date of publication of application: **04.09.2024**
(21) Application number: 23166242.0
(22) Date of filing: 31.03.2023
(51) Int. Cl.: G06N 20/00, G06N 3/096

(54) **METHOD AND SYSTEM FOR KNOWLEDGE TRANSFER BETWEEN DIFFERENT ML MODEL ARCHITECTURES**

(30) Priority: 03.03.2023 US 202363449869 P
(71) Applicant: Infosys Limited, 560-100 Bangalore (IN)
(72) Inventor: GANESAN, Rajeshwari, 560100 Bangalore (IN); HONNA, Megha, 560100 Bangalore (IN)
(74) Representative: Savi, Massimiliano

(57) **Abstract**

This disclosure relates to a method and system for managing knowledge of a primary ML model. The method includes generating a set of class probabilities for an unlabelled dataset based on a labelling function. The unlabelled dataset may be associated with the primary ML model, and the primary ML model may employ a first ML model architecture. Further, the method includes transferring the unlabelled dataset and the associated set of class probabilities for training a secondary ML model based on a knowledge transfer technique. The secondary ML model may employ a second ML model architecture. It should be noted that the first ML model architecture is different from the second ML model architecture.

## Description

This application claims benefit of Indian Patent Application No. 202344024595, filed March 31, 2023, and U.S. Provisional Patent Application Serial No. 63/449,869, filed March 3, 2023, which are incorporated herein by reference in their entirety.

### FIELD

This disclosure relates generally to Machine Learning (ML) Operations, and more particularly to a method and system for knowledge transfer between different ML model architectures.

### BACKGROUND

With the continuous advancement in machine learning, there has been a significant evolution in the fundamental structure of model architecture. This evolution has resulted in the development and optimization of new architectures for machine learning (ML) model to enhance its performance. The availability of larger and more diverse datasets has led to the development of more complex architectures that have significantly improved the performance of ML models in various tasks.

These architectural differences mayinclude, but are not limited to, changes to the number and type of layers, the number of neurons, their interconnection, the use of different activation functions, or the learning rate, as well as the introduction of new techniques such as attention mechanisms. Furthermore, there is a growing trend of designing machine learning systems to continuously learn with human feedback and new data in production. Over time, the production ML models constantly learn and adapt to new data, which means that even when the ML model architecture is the same in both pre-production environments (e.g., a Quality Assurance (QA) environment, DEV environment, or a test environment), and production environments, the performance of these models is fundamentally different.

However, these advances come with challenges, particularly in the pre-production environment, where it is difficult to replicate the performance of production ML models due to the inability to move sensitive production data or production ML model to the pre-production environment. This poses challenges for testing, as production data or production ML model often contains sensitive information that cannot be shared or moved outside of the production environment due to regulatory, privacy, or security reasons.

There is, therefore, a need in the present state of art, for improved method and system that transfer knowledge from exisiting ML model architecture to a new ML model architecture based on a knowledge transferring technique.

### SUMMARY

In one embodiment, a method for managing knowledge of a primary ML model is disclosed. In one example, the method may include generating a set of class probabilities for an unlabelled dataset based on a labelling function. The unlabelled dataset may be associated with the primary ML model, and the primary ML model may employ a first ML model architecture. Further, the method may include transferring the unlabelled dataset and the associated set of class probabilities for training a secondary ML model based on a knowledge transfer technique. The secondary ML model may employ a second ML model architecture. It should be noted that the first ML model architecture may be different from the second ML model architecture.

In one embodiment, a system for managing knowledge of a primary ML model is disclosed. In one example, the system may include a processing circuitry and a memory communicatively coupled to the processing circuitry. The memory may store processor-executable instructions, which, on execution, may cause the processing circuitry to generate a set of class probabilities for an unlabelled dataset based on a labelling function. The unlabelled dataset may be associated with the primary ML model, and the primary ML model may employ a first ML model architecture. The processor-executable instructions, on execution, may further cause the processing circuitry to transfer the unlabelled dataset and the associated set of class probabilities for training a secondary ML model based on a knowledge transfer technique. The secondary ML model may employ a second ML model architecture. It should be noted that the first ML model architecture is different from the second ML model architecture.

In one embodiment, a non-transitory computer-readable medium storing computer-executable instructions for managing knowledge of a primary ML model is disclosed. In one example, the stored instructions, when executed by a processing circuitry, cause the processing circuitry to perform operations including generating a set of class probabilities for an unlabelled dataset based on a labelling function. The unlabelled dataset may be associated with the primary ML model, and the primary ML model may employ a first ML model architecture. Further, the operations may further include transferring the unlabelled dataset and the associated set of class probabilities for training a secondary ML model based on a knowledge transfer technique. The secondary ML model may employ a second ML model architecture. It should be noted that the first ML model architecture is different from the second ML model architecture.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, explain the disclosed principles.
**FIG. 1** is a block diagram of an environment for managing knowledge of a primary Machine Learning (ML) model, in accordance with an exemplary embodiment of the present disclosure;
**FIG. 2** is a block diagram of a process for managing knowledge of a primary ML model, in accordance with an exemplary embodiment of the present disclosure;
**FIG. 3** is a flow diagram of an exemplary process for managing knowledge of a primary ML model, in accordance with an exemplary embodiment of the present disclosure;
**FIG. 4A** is a flow diagram of a detailed exemplary control logic for managing knowledge of a primary ML model, in accordance with an exemplary embodiment of the present disclosure;
**FIG. 4B** is a flow diagram of a detailed exemplary control logic for managing knowledge of a primary ML model, in accordance with an exemplary embodiment of the present disclosure;
**FIG. 5** is a generic block diagram of a knowledge distillation process for generating a set of class probabilities, in accordance with an exemplary embodiment of the present disclosure; and
**FIG. 6** is a block diagram that illustrates a system architecture of a computer system for managing knowledge of a primary ML model, in accordance with an exemplary embodiment of the present disclosure.

### DETAILED DESCRIPTION

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the spirit and scope of the disclosed embodiments. It is intended that the following detailed description be considered as exemplary only, with the true scope and spirit being indicated by the following claims.

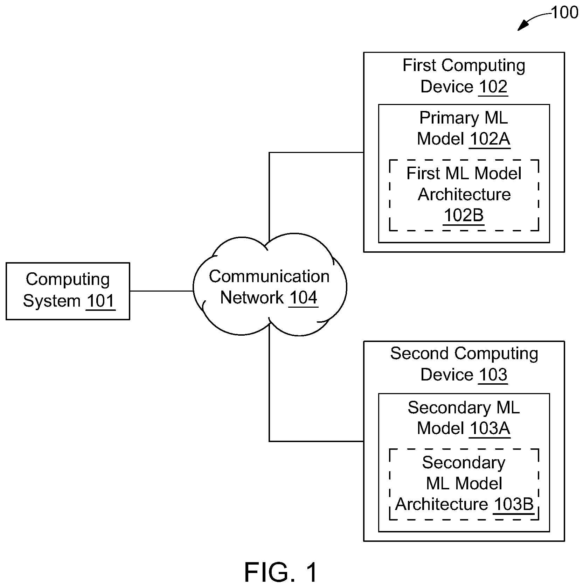

**FIG. 1** is a diagram that illustrates an environment 100 for managing knowledge of a primary Machine Learning (ML) model, in accordance with an exemplary embodiment of the present disclosure.

The environment 100 may include a computing system 101, a first computing device 102, and a secondary computing device 103. The first computing device 102 may include a primary ML model 102A. The second computing device 103 may include a secondary ML model 103A. The computing system 101, the first computing device 102, and the secondary computing device 103 are configured to communicate with each other via a communication network 104. Examples of the communication network 104 may include, but are not limited to, a wireless fidelity (Wi-Fi) network, a light fidelity (Li-Fi) network, a local area network (LAN), a wide area network (WAN), a metropolitan area network (MAN), a satellite network, the Internet, a fiber optic network, a coaxial cable network, an infrared (IR) network, a radio frequency (RF) network, and a combination thereof.

The communication network 104 may facilitate the computing system 101 to perform one or more operations in order to manage knowledge of the primary ML model 102A. In particular, the computing system 101 may communicate with the first computing device 102, and the second computing device 103 to transfer knowledge of the primary ML model 102A having a first ML model architecture 102B to the secondary ML model 103A having a second ML model architecture 103B based on a knowledge transfer technique (for example, a knowledge distillation technique). It should be noted that the first ML model architecture is different from the second ML model architecture. As will be appreciated, in some embodiments the primary ML model 102A, and the secondary ML model 103A may be part of the computing system 101.

Knowledge distillation is a technique used to transfer knowledge from a pre-trained model, called a `teacher model', to a smaller model, called a `student model'. In an embodiment, the primary ML model 102A may be used as the `teacher model' and the secondary ML model 103A may be used as the 'student model'. The student model is trained to replicate the behavior of the teacher model, typically by using the teacher model's predictions as 'soft targets' during training. The student model may learn from the teacher model even if the model architecture is different, by learning the representations learned by the teacher model.

The knowledge distillation technique has been traditionally used to shrink large ML models into smaller efficient ML models so that it may be run on mobile or other edge devices. However, the knowledge distillation technique discussed herein in one or more embodiments of the present disclosure may be used in Machine Learning Operations (MLOps) to transfer the knowledge of the primary ML model 102A from existing architecture (e.g., the first ML model architecture) to a new architecture (e.g., the second ML model architecture) of the secondary ML model 103A. The term MLOps or is the practice of applying DevOps (Development operations) principles to machine learning workflows, enabling the efficient development, deployment, and maintenance of machine learning models at scale. In the process of knowledge distillation, the ML model is made more resilient to data drift issues and make algorithmic changes in the knowledge distillation technique in such as way so that it may cater to a more complex and/or bigger and new ML model architecture.

In some embodiments, the knowledge transfer technique has been traditionally used to shrink large ML models into smaller efficient ML models so that it may be run on mobile or other edge devices. However, the knowledge transfer technique discussed herein in one or more embodiments of the present disclosure may be used in MLOps to transfer the knowledge of the primary ML model 102A from existing architecture (e.g., the first ML model architecture) to a new architecture (e.g., the second ML model architecture) of the secondary ML model 103A. In the process, the ML model is made more resilient to data drift issues and make algorithmic changes in the knowledge distillation technique in such as way so that it may cater to a more complex and/or bigger and new ML model architecture.

Therefore, to manage knowledge of the primary ML model 102A, or in other words, to perform ML model architecture based knowledge transferring technique, initially the computing system 101 may receive a labelled dataset in a first environment. The first environment may correspond to a production environment and the labelled dataset received may be a production data having a pre-assigned label.

Upon receiving the labelled dataset, the computing system 101 may remove the pre-assigned label from the associated labelled dataset present in the first environment to generate the unlabelled dataset. It should be noted that the unlabelled dataset may be associated with the primary ML model 102A having the first ML model architecture.

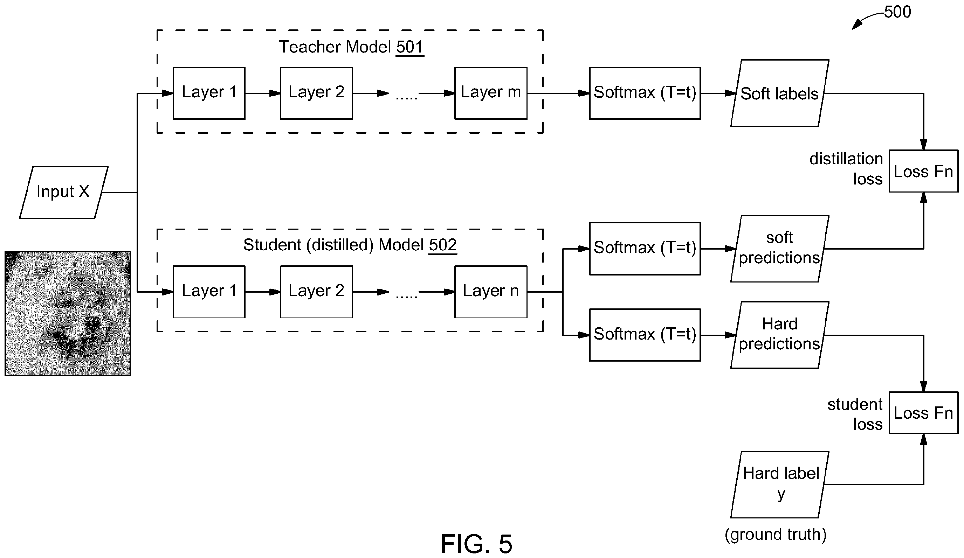

Further, the computing system 101 may generate a set of class probabilities for the unlabelled dataset based on a labelling function. The labelling function may correspond to a soft max function. A process of generating the set of class probabilities based on soft max function is explained in greater detail in conjunction with FIG. 5.

Once the set of class probabilities is generated, the computing system 101 may further transfer the unlabelled dataset and the associated set of class probabilities for training the secondary ML model 103A having the second ML model architecture based on the knowledge transfer technique. It should be noted that the unlabelled dataset and the associated set of class probabilities may be transferred from the primary ML model 102A of the first computing device 102 to the secondary ML model 103A of the second computing device 103 for training the secondary ML model 103A.

Once the secondary ML model is trained, the computing system 101 may further export the trained secondary ML model from the first environment to a second environment based on a privacy protection technique. The second environment may be, for example, a pre-production environment, a Quality Assurance (QA) environment, or a test environment. The privacy protection technique is one of a Fully Homomorphic Encryption (FHE) technique, a Multi-Party Computation (MPC) technique, a Trusted Execution Environments (TEEs) technique, a secure enclave technique, a secure communication channel technique, and an obfuscation technique. It should be noted that the trained secondary ML model that is exported to one of the pre-production environment, the QA environment, or the test environment may be utilized for software testing and development purposes.

In machine learning, the production environment is a system or platform where the machine learning model is deployed to make predictions or perform a task in real-world scenarios. The production environment is where the model is integrated with other software systems, such as web applications or mobile apps, and where it interacts with end-users. On the other hand, the pre-production or QA environment is a separate testing environment used to test the performance of a machine learning model before it is deployed in the production environment. The QA environment simulates real-world scenarios and allows developers to identify and fix any issues or bugs in the model's behavior before it goes live in the production environment.

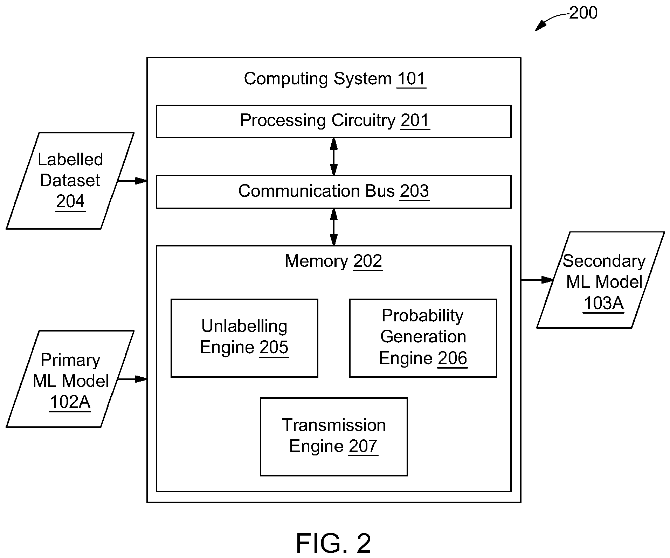

**FIG. 2** is a diagram that illustrates a process for managing knowledge of a primary ML model, in accordance with an exemplary embodiment of the present disclosure. FIG. 2 is explained in conjunction with elements from FIG. 1. The computing system 101 may include a processing circuitry 201 and a memory 202 communicatively coupled to the processing circuitry 201 via a communication bus 203. The memory 202 may be a non-volatile memory or a volatile memory. Examples of non-volatile memory may include, but are not limited to, a flash memory, a Read Only Memory (ROM), a Programmable ROM (PROM), Erasable PROM (EPROM), and Electrically EPROM (EEPROM) memory. Examples of volatile memory may include, but are not limited to, Dynamic Random Access Memory (DRAM), and Static Random-Access Memory (SRAM).

The memory 202 may store processor instructions. The processor instructions, when executed by the processing circuitry 201, may cause the processing circuitry 201 to implement one or more embodiments of the present disclosure such as, but not limited to, unlabelled the dataset, generate a set of class probabilities for the unlabelled dataset, and transfer the unlabelled dataset and the associated set of class probabilities for training a secondary ML model. The memory 202 may also store various data (e.g., unlabelled dataset, data related to a set of class probability, ML model weights ML model knowledge, etc.) that may be captured, processed, and/or required by the processing circuitry 201 of the computing system 101 to manage knowledge of the primary ML model 206. The memory 202 may include various engines, i.e., an unlabelling engine 205, a probability generating engine 206, and a transmitting engine 207 that may be capable of managing knowledge of the primary ML model 102A.

In some embodiments, in order to manage knowledge of the primary ML model 102A, an input dataset may be received in the first environment. The first environment may correspond to a production environment. It should be noted that the input dataset may be received with or without labels.

Upon receiving the input dataset without labels in the first environment (i.e., the production environment), the probability generating engine 206 may generate a set of class probabilities for the input dataset based on a labelling function.

Alternatively, in order to manage knowledge of the primary ML model 102A, initially, a dataset with pre-assigned labels (referred to as a labelled dataset 204) may be received in the first environment.

Upon receiving the labelled dataset in the first environment (i.e., the production environment), the unlabelling engine 205 may remove the pre-assigned label from the associated labelled dataset to generate the unlabelled dataset. It should be noted that the unlabelled dataset may be associated with the primary ML model 102A having the first ML model architecture. It should be noted that the unlabelling engine 205 may only be required in embodiments where the input dataset includes labels.

Further, the probability generating engine 206 may generate a set of class probabilities for the unlabelled dataset based on a labelling function. The labelling function may correspond to a soft max function. The soft max function is a mathematical function that is commonly used in machine learning to generate probabilities for classification tasks. It takes a vector of scores or logits and transforms them into a probability distribution over the classes. The soft max function works by taking the exponent of each score in the input vector and normalizing them by dividing each exponentiated score by the sum of all exponentiated scores. The resulting values are then between 0 and 1 and sum up to 1, which may be interpreted as the probabilities of the input vector belonging to each class. In practice, the soft max function is often used as the final activation function in a neural network for multi-class classification tasks. It provides a probabilistic interpretation of the network's output and allows a user to make predictions based on the class probabilities.

Once the set of class probabilities is generated, the transmission engine 207 may further transfer the unlabelled dataset and the associated set of class probabilities from the primary ML model 102A to the secondary ML model 103A for training the secondary ML model 103A based on the knowledge transfer technique. It should be noted that the secondary ML model 103A may employ a second ML model architecture. It should also be noted that the first ML model architecture of the primary ML model 102A is different from the second ML model architecture of the secondary ML model 103A.

In the knowledge transfer technique (also referred to as a knowledge distillation technique), the primary ML model 102A may act as a `teacher model' and the secondary ML model 103A may act as a 'student model'. Thus, the secondary ML model 103A may be trained by transferring knowledge from the primary ML model 102A when architectures of both ML models are different. The primary ML model 102A present in the production environment may also be referred as a primary production ML model. It should be noted that the primary production ML model should be a copy of the original production ML model that is used as the teacher model for training the secondary ML model 103A. The purpose of using copy of the original production ML model as the teacher model instead of the original production ML model is simply to avoid more workload on the original production ML model, as it may impact to production performance, throughput, and response time.

In some embodiments, once the secondary ML model 103A is trained, the computing system 101 may securely export the trained secondary ML model (i.e., weights associated with the trained secondary ML model) from the first environment to a second environment. The second environment may be, for example, a pre-production environment, a Quality Assurance (QA) environment, or a test environment. In other words, the trained secondary ML model may be securely exported from the production environment to one of the pre-production environment, the QA environment, or the test environment for software testing and development.

Therefore, the trained secondary ML may be exported to the second environment based on any of the following privacy protection techniques discussed herein. The following privacy protection techniques may be a Fully Homomorphic Encryption (FHE) technique, a Multi-Party Computation (MPC) technique, a Trusted Execution Environments (TEEs) technique, a secure enclave technique, a secure communication channel technique, and an obfuscation technique.

The FHE technique to protect the model weights includes encrypting the weights using an FHE scheme before sending them to the QA environment. The QA environment may then be able to perform computations on the encrypted weights, such as testing the trained secondary ML model, without the need to decrypt them. This may ensure that the weights remain private and secure even while they are being used in the QA environment.

The secure MPC technique may be used to allow multiple parties to perform computations on private data without disclosing the data to any of the parties, which could be used to keep the model weights confidential while allowing the QA environment to test the trained secondary ML model.

The TEEs technique may be utilized in secure areas of a computer or mobile device that ensures that sensitive data is processed in a trusted environment. This technique may be used to keep the model weights secure while allowing the QA environment to test the trained secondary ML model.

The secure enclaves may be specialized processor or co-processor that provide a secure area of memory for storing sensitive data. This technique may be used to keep the model weights secure while allowing the QA environment to test the model.

By utilizing the secure communication channels, sensitive data such as model weights may be encrypted and sent over secure communication channels to the QA environment. This may be done using technologies such as SSL/TLS or VPN.

The obfuscation is a technique that makes it difficult for an attacker to understand the structure and behavior of a model by making the model more complex or difficult to reverse engineer.

It should be noted that all such aforementioned engines 205 - 207 may be represented as a single module or a combination of different modules. Further, as will be appreciated by those skilled in the art, each of the modules 205 - 207 may reside, in whole or in parts, on one device or multiple devices in communication with each other. In some embodiments, each of the modules 205 - 207 may be implemented as dedicated hardware circuit comprising custom application-specific integrated circuit (ASIC) or gate arrays, off-the-shelf semiconductors such as logic chips, transistors, or other discrete components. Each of the modules 205 - 207 may also be implemented in a programmable hardware device such as a field programmable gate array (FPGA), programmable array logic, programmable logic device, and so forth. Alternatively, each of the modules 205 - 207 may be implemented in software for execution by various types of processors (e.g., the processing circuitry 201). An identified module of executable code may, for instance, include one or more physical or logical blocks of computer instructions, which may, for instance, be organized as an object, procedure, function, or other construct. Nevertheless, the executables of an identified engine or component need not be physically located together, but may include disparate instructions stored in different locations which, when joined logically together, include the module and achieve the stated purpose of the module. Indeed, an engine of executable code could be a single instruction, or many instructions, and may even be distributed over several different code segments, among different applications, and across several memory devices.

As will be appreciated by one skilled in the art, a variety of processes may be employed for managing knowledge of primary ML model. For example, the exemplary computing system 101 may manage knowledge of primary ML model by the processes discussed herein. In particular, as will be appreciated by those of ordinary skill in the art, control logic and/or automated routines for performing the techniques and steps described herein may be implemented by the computing system 101 either by hardware, software, or combinations of hardware and software. For example, suitable code may be accessed and executed by the one or more processors on the computing system 101 to perform some or all of the techniques described herein. Similarly, application specific integrated circuits (ASICs) configured to perform some or all of the processes described herein may be included in the one or more processors on the computing system 101.

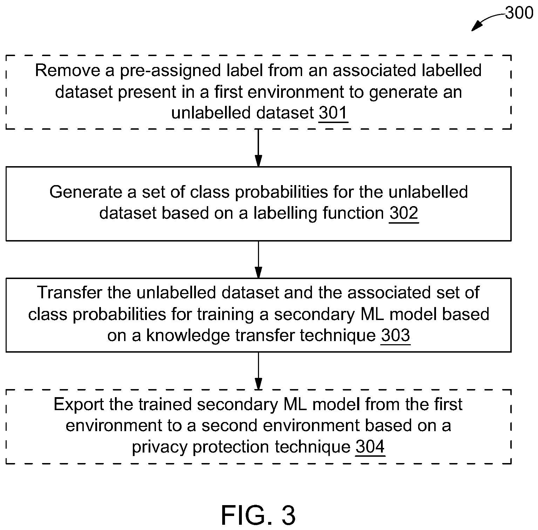

**FIG. 3** is a diagram that illustrates an exemplary process 300 for managing knowledge of primary ML model is depicted via a flowchart, in accordance with an exemplary embodiment of the present disclosure. FIG. 3 is explained in conjunction with elements from FIGS. 1 and 2. In an embodiment, the process 300 may be implemented by the computing system 101. The process 300 may include removing, by the computing system 101, a pre-assigned label from an associated labelled dataset that is present in a first environment to generate an unlabelled dataset, at step 301.

Further, the process 300 may include generating, by the computing system 101, a set of class probabilities for the unlabelled dataset based on a labelling function, at step 302. It should be noted that the unlabelled dataset may be associated with the primary ML model, and the primary ML model may employ a first ML model architecture.

Upon generating the set of class probabilities, the process 300 may further include transferring, by the computing system 101, the unlabelled dataset and the associated set of class probabilities for training a secondary ML model based on a knowledge transfer technique, at step 303. The secondary ML model may employ a second ML model architecture. It should be noted that the first ML model architecture is different from the second ML model architecture.

Once the secondary ML model is trained, in some embodiments, the process 300 may further include exporting, by the computing system 101, the trained secondary ML model from the first environment to a second environment based on a privacy protection technique, at step 304. The first environment may be a production environment and the second environment may be one of a pre-production environment, QA environment, or a test environment. The privacy protection technique may be one of a FHE technique, an MPC technique, a TEEs technique, a secure enclave technique, a secure communication channel technique, and an obfuscation technique.

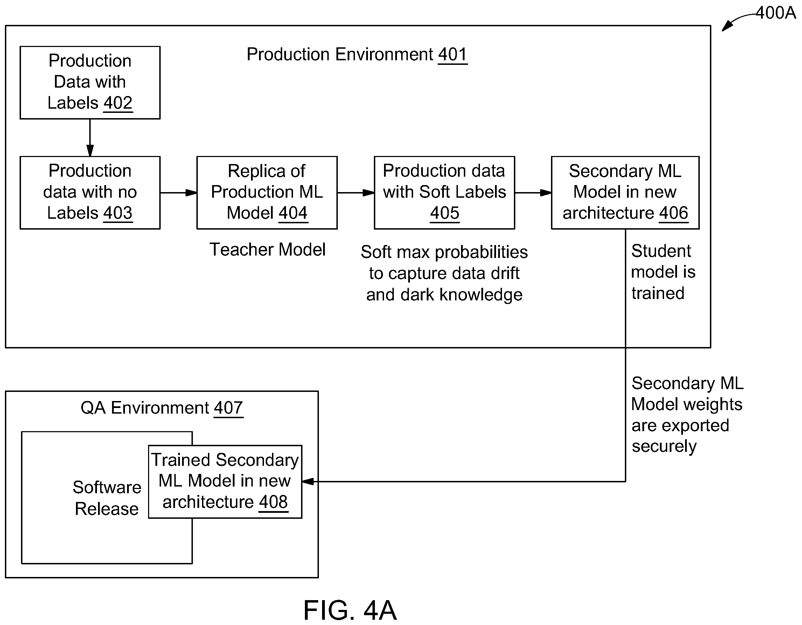

**FIG. 4A** is a flow diagram that illustrates a detailed exemplary control logic 400A for managing knowledge of primary ML model, in accordance with an exemplary embodiment of the present disclosure. FIG. 4A is explained in conjunction with elements from FIGS. 1, 2, and 3. In an embodiment, the control logic 400A may be implemented by the computing system 101. In general, the process of managing knowledge of the primary ML model 102A may be performed broadly in two steps. In the first step, the primary ML production model and the associated unlabelled production dataset may be used as the `production teacher model' in an existing ML model architecture (e.g., the first ML model architecture) to create `production student model' of secondary production ML model in a new ML model architecture (e.g., the second ML model architecture).

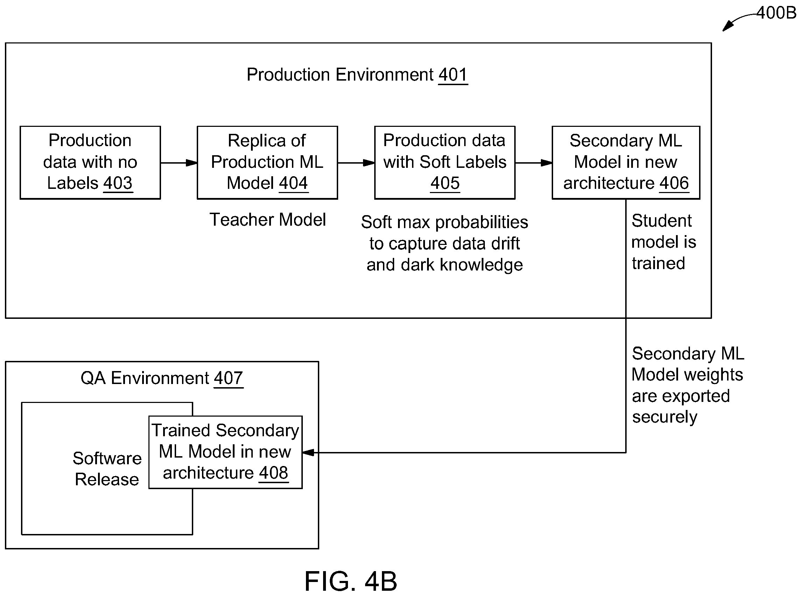

Further in the second step, the `production student model' created in the new architecture may be exported to a QA environment 407 in a privacy protecting manner. These two steps are explained in greater detail via the control logic 400A of present FIG. 4.

Initially, at block 402 of the control logic 400A, a production data in a labeled format (e.g., production dataset with pre-assigned labels) may be received in a production environment 401. Further, at block 403 of the control logic 400A, the pre-assigned label from the associated labelled dataset present in the production environment 401 may be removed to generate an unlabelled dataset. As will be appreciated, the pre-assigned label from the associated labelled dataset may be removed from one or more existing techniques including, but not limited to, manual annotation, random sampling, data augmentation, or weak supervision.

At block 404 of the control logic 400A, the unlabelled dataset along with a replica of production ML model (e.g., the primary ML model 102A) may be used as the `production teacher model'. The purpose of using unlabelled dataset is to make the next ML model (i.e., the secondary ML model 103A) so generated that it may be aware of data drift. The data drift may refer to changes in a distribution of the data itself, often caused by natural changes in the underlying process that generates the data. These changes may affect various data attributes such as the mean, variance, or correlation structure, and may pose challenges for machine learning models that cannot adjust to the evolving data distribution.

At block 405 of the control logic 400A, the `teacher production model' may be used to label the unlabelled production dataset with soft label based on labelling function (preferably based on soft max encoding function) rather than a hard label (with one hot encoding). In other words, the primary production ML model 102A that is used as the `teacher production model' may be used to generate a set of class probabilities (e.g., soft max probabilities) for the unlabelled dataset based on the soft max function. The generated soft max probabilities may capture data drift and dark knowledge hidden in the primary production ML model 102A.

Further, at block 406 of control logic 400A, the unlabelled dataset and the associated set of class probabilities may be transferred to create a ` production student model' (e.g., the secondary ML model 103A) in a new architecture (e.g., the second ML model architecture) based on the knowledge distillation technique. Further, the `production student model' may be trained based on the set of class probabilities and the dark knowledge learned by the teacher production model.

Once the `student production model' or the secondary ML model 103A is trained, the control logic 400A at block 408 may securely export a plurality of weights associated with the trained ML model to the QA environment 407 in order to implement the trained ML model in a new release software for testing and development purpose. The trained secondary ML may be exported to the second environment based on any of the following privacy protection techniques, such as a FHE technique, a MPC technique, a TEEs technique, a secure enclave technique, a secure communication channel technique, and an obfuscation technique.

**FIG. 4B** is a flow diagram that illustrates a detailed exemplary control logic 400B for managing knowledge of primary ML model, in accordance with an exemplary embodiment of the present disclosure. FIG. 4B is explained in conjunction with elements from FIGS. 1, 2, 3 and 4A. In an embodiment, the control logic 400B may be implemented by the computing system 101. At block 403 of the control logic 400B, the production data with no labels may be received in the production environment 401.

At block 404 of the control logic 400, the production data with no labels along with a replica of production ML model (e.g., the primary ML model 102A) may be used as the `production teacher model'. The purpose of using the production data with no labels is to make the next ML model (i.e., the secondary ML model 103A) so generated that it may be aware of data drift. The data drift may refer to changes in a distribution of the data itself, often caused by natural changes in the underlying process that generates the data. These changes may affect various data attributes such as the mean, variance, or correlation structure, and may pose challenges for machine learning models that cannot adjust to the evolving data distribution.

At block 405 of the control logic 400B, the `teacher production model' may be used to label the production data with soft label based on labelling function (preferably based on soft max encoding function) rather than a hard label (with one hot encoding). In other words, the primary production ML model 102A that is used as the `teacher production model' may be used to generate a set of class probabilities (e.g., soft max probabilities) for the production data with no labels based on the soft max function. The generated soft max probabilities may capture data drift and dark knowledge hidden in the primary production ML model 102A.

Further, at block 406 of control logic 400B, the production data with no labels and the associated set of class probabilities may be transferred to create a ` production student model' (e.g., the secondary ML model 103A) in a new architecture (e.g., the second ML model architecture) based on the knowledge distillation technique. Further, the `production student model' may be trained based on the set of class probabilities and the dark knowledge learned by the teacher production model.

Once the `student production model' or the secondary ML model 103A is trained, the control logic 400B at block 408 may securely export a plurality of weights associated with the trained ML model to the QA environment 407 in order to implement the trained ML model in a new release software for testing and development purpose. The trained secondary ML may be exported to the second environment based on any of the following privacy protection techniques, such as a FHE technique, a MPC technique, a TEEs technique, a secure enclave technique, a secure communication channel technique, and an obfuscation technique.

**FIG. 5** is a generic block diagram generic block diagram of a knowledge distillation process 500 for generating a set of class probabilities based on a soft max function, in accordance with an exemplary embodiment of the present disclosure. FIG. 5 is explained in conjunction with elements from FIGS. 1, 2, 3, and 4. When the ML model architecture has changed with the new release, exporting the model weights from the production environment to the QA environment may not work, as the QA environment may not be able to use the model weights of the existing architecture with the new architecture. To address this, a knowledge distillation technique is used. knowledge distillation includes two neural networks i.e., a teacher model 501 and a student model 502. The teacher model 501 is a larger model that act as a reference model for training the student model 502. The student model 502 utilizes a process known as `distillation' to extract and transfer the knowledge acquired by the teacher model 501 to the student model 502. As a result, the student model 502 achieves the same or better accuracy as the teacher model 501 while being more efficient for deployment. It should be noted that the knowledge transfer technique discussed in one or more embodiments of the present disclosure may be used in way to create larger and more sophisticated ML model architecture.

The process of transferring knowledge from a large and complex teacher model 501 to a smaller student model 502 includes distilling the knowledge using a technique called Distillation loss. This loss function utilizes soft targets to minimize the difference between the logits produced by the teacher model 501 and the student model 502. To transfer knowledge, the teacher model 501 is trained with a high temperature in its soft max function to generate soft target distributions. In the context of the soft max function, temperature is a scalar value that is used to control the level of confidence or uncertainty in the probabilities that are outputted by the soft max function. The same temperature is used for training the student model 502, but after training, the student model 502 uses a temperature of 1.

The main aim of knowledge distillation is to minimize the KL divergence between the probabilistic outputs of the teacher and student models. This ensures that the student model outputs match the soft targets generated by the teacher model 501. The soft targets uses the logits as inputs to the final softmax rather than the softmax probabilities, making it easier to train the student model. As the soft targets have high entropy, the soft targets provide more information per training case and have less variance in the gradient between training cases compared to hard targets. The term `High entropy' in this context refers to a level of uncertainty or randomness in the soft targets generated by the teacher model. Soft targets are typically probabilities assigned to each class by the teacher model, and high entropy means that the probabilities assigned to different classes are more evenly distributed, indicating a higher degree of uncertainty or ambiguity in the teacher's prediction. This allows for more efficient transfer of knowledge from teacher model to student model.

By way of an example, as depicted in the present FIG. 5, consider an exemplary image of a dog that is to be classified as dog, lion, tiger, and panther. Once the ML model is classified and know that the exemplary image is of the dog, the data may be predicted in a form of class probabilities by capturing dark (hidden) knowledge. For example, a set of probabilities for the class 'dog' i.e., the exemplary image is of the dog and not of the lion, tiger, or panther may be determined based on one hot encoding technique. The exemplary set of class probabilities of dog may be represented as Dog = [0.9, 0.1, 10-6, 10-9] .

By way of another example, consider another exemplary image that includes a handwritten image of alpha-numeric (e.g., 1, 2, 3, 4, 5, 6, 7, 8, 9, A, B, C, D, E, F,G, etc.). It should be noted that the number digits or alphabets may be written in such a way that they may resemble one other. For example, the digit '1' may resemble the digit '7' and the digit '2' may resemble the alphabet 'Z'. The ML model may predict the data corresponding to the exemplary image in a form of class probabilities by capturing dark (hidden) knowledge. The class probabilities may determine a probability of each digit or alphabet resemblance with other digit or alphabet. For example, a set of probabilities for the digit '1' that it is actually '1' and not '7' may be determined based on one hot encoding technique. The exemplary set of class probabilities of digit '1' may be represented as 1 = [0.99, 0.1, 10-4, 10-6] .

As will be also appreciated, the above described techniques may take the form of computer or controller implemented processes and apparatuses for practicing those processes. The disclosure can also be embodied in the form of computer program code containing instructions embodied in tangible media, such as floppy diskettes, solid state drives, CD-ROMs, hard drives, or any other computer-readable storage medium, wherein, when the computer program code is loaded into and executed by a computer or controller, the computer becomes an apparatus for practicing the invention. The disclosure may also be embodied in the form of computer program code or signal, for example, whether stored in a storage medium, loaded into and/or executed by a computer or controller, or transmitted over some transmission medium, such as over electrical wiring or cabling, through fiber optics, or via electromagnetic radiation, wherein, when the computer program code is loaded into and executed by a computer, the computer becomes an apparatus for practicing the invention. When implemented on a general-purpose microprocessor, the computer program code segments configure the microprocessor to create specific logic circuits.

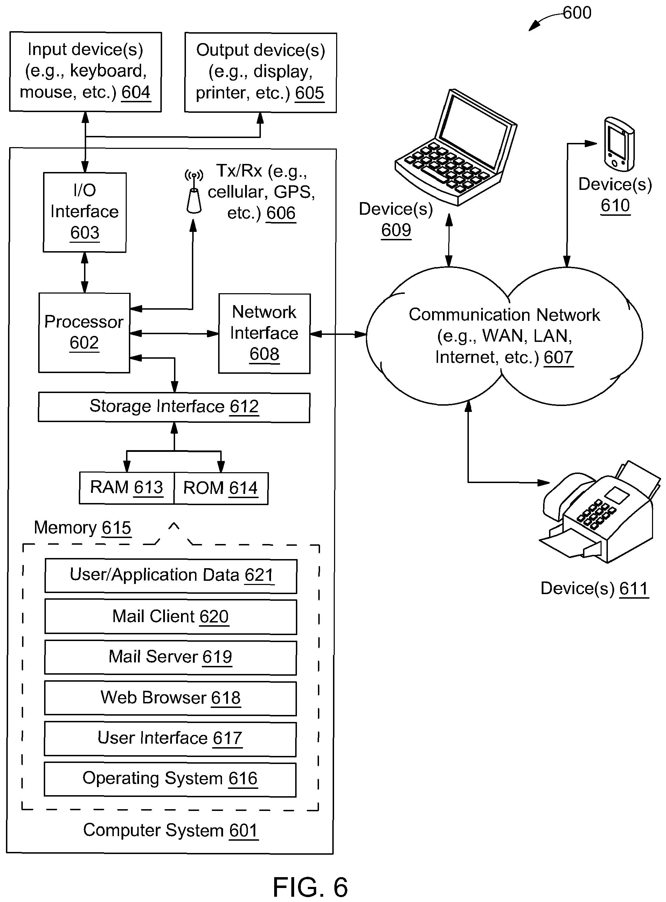

The disclosed methods and systems may be implemented on a conventional or a general-purpose computer system, such as a personal computer (PC) or server computer. **FIG. 6** is a block diagram that illustrates a system architecture 600 of a computer system 601 for managing knowledge of a primary ML model, in accordance with an exemplary embodiment of the present disclosure. Variations of computer system 601 may be used for implementing server 101 for determination of personality traits of agents in a contact center. Computer system 601 may include a central processing unit ("CPU" or "processor") 602. Processor 602 may include at least one data processor for executing program components for executing user-generated or system-generated requests. A user may include a person, a person using a device such as such as those included in this disclosure, or such a device itself. The processor may include specialized processing units such as integrated system (bus) controllers, memory management control units, floating point units, graphics processing units, digital signal processing units, etc. The processor may include a microprocessor, such as AMD^{®} ATHLON^{®}, DURON^{®} OR OPTERON^{®}, ARM's application, embedded or secure processors, IBM^{®} POWERPC^{®}, INTEL^{®} CORE^{®} processor, ITANIUM^{®} processor, XEON^{®} processor, CELERON^{®} processor or other line of processors, etc. The processor 602 may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc.

Processor 602 may be disposed in communication with one or more input/output (I/O) devices via I/O interface 603. The I/O interface 603 may employ communication protocols/methods such as, without limitation, audio, analog, digital, monoaural, RCA, stereo, IEEE-1394, near field communication (NFC), FireWire, Camera Link^{®}, GigE, serial bus, universal serial bus (USB), infrared, PS/2, BNC, coaxial, component, composite, digital visual interface (DVI), high-definition multimedia interface (HDMI), radio frequency (RF) antennas, S-Video, video graphics array (VGA), IEEE 802.n /b/g/n/x, Bluetooth, cellular (e.g., code-division multiple access (CDMA), high-speed packet access (HSPA+), global system for mobile communications (GSM), long-term evolution (LTE), WiMAX, or the like), etc.

Using the I/O interface 603, the computer system 601 may communicate with one or more I/O devices. For example, the input device 604 may be a keyboard, mouse, joystick, (infrared) remote control, camera, card reader, fax machine, dongle, biometric reader, microphone, touch screen, touchpad, trackball, sensor (e.g., accelerometer, light sensor, GPS, altimeter, gyroscope, proximity sensor, or the like), stylus, scanner, storage device, transceiver, video device/source, visors, etc. Output device 606 may be a printer, fax machine, video display (e.g., cathode ray tube (CRT), liquid crystal display (LCD), light-emitting diode (LED), plasma, or the like), audio speaker, etc. In some embodiments, a transceiver 606 may be disposed in connection with the processor 602. The transceiver 606 may facilitate various types of wireless transmission or reception. For example, the transceiver 606 may include an antenna operatively connected to a transceiver chip (e.g., TEXAS INSTRUMENTS^{®} WILINK WL1286^{®}, BROADCOM^{®} BCM4660IUB8^{®}, INFINEON TECHNOLOGIES^{®} X-GOLD 1436-PMB9800^{®} transceiver, or the like), providing IEEE 802.6a/b/g/n, Bluetooth, FM, global positioning system (GPS), 2G/3G HSDPA/HSUPA communications, etc.

In some embodiments, the processor 602 may be disposed in communication with a communication network 607 via a network interface 608. The network interface 608 may communicate with the communication network 607. The network interface 608 may employ connection protocols including, without limitation, direct connect, Ethernet (e.g., twisted pair 10/100/1000 Base T), transmission control protocol/internet protocol (TCP/IP), token ring, IEEE 802.6a/b/g/n/x, etc. The communication network 607 may include, without limitation, a direct interconnection, local area network (LAN), wide area network (WAN), wireless network (e.g., using Wireless Application Protocol), the Internet, etc. Using the network interface 608 and the communication network 607, the computer system 601 may communicate with devices 606, 609, 610, and 611. These devices may include, without limitation, personal computer(s), server(s), fax machines, printers, scanners, various mobile devices such as cellular telephones, smartphones (e.g., APPLE^{®} IPHONE^{®}, BLACKBERRY^{®} smartphone, ANDROID^{®} based phones, etc.), tablet computers, eBook readers (AMAZON^{®} KINDLE^{®}, NOOK^{®} etc.), laptop computers, notebooks, gaming consoles (MICROSOFT^{®} XBOX^{®}, NINTENDO^{®} DS^{®}, SONY^{®} PLAYSTATION^{®}, etc.), or the like. In some embodiments, the computer system 601 may itself embody one or more of these devices.

In some embodiments, the processor 602 may be disposed in communication with one or more memory devices 616 (e.g., RAM 613, ROM 614, etc.) via a storage interface 612. The storage interface 612 may connect to memory devices 616 including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), STD Bus, RS-232, RS-422, RS-486, I2C, SPI, Microwire, 1-Wire, IEEE 1284, Intel^{®} QuickPathInterconnect, InfiniBand, PCIe, etc. The memory drives may further include a drum, magnetic disc drive, magneto-optical drive, optical drive, redundant array of independent discs (RAID), solid-state memory devices, solid-state drives, etc.

The memory devices 616 may store a collection of program or database components, including, without limitation, an operating system 616, user interface 617, web browser 618, mail server 619, mail client 620, user/application data 621 (e.g., any data variables or data records discussed in this disclosure), etc. The operating system 616 may facilitate resource management and operation of the computer system 601. Examples of operating systems include, without limitation, APPLE^{®} MACINTOSH^{®} OS X, UNIX, Unix-like system distributions (e.g., Berkeley Software Distribution (BSD), FreeBSD, NetBSD, OpenBSD, etc.), Linux distributions (e.g., RED HAT^{®}, UBUNTU^{®}, KUBUNTU^{®}, etc.), IBM^{®} OS/2, MICROSOFT^{®} WINDOWS^{®} (XP^{®}, Vista^{®}/7/8/10/6, etc.), APPLE^{®} IOS^{®}, GOOGLE^{®} ANDROID^{®}, BLACKBERRY^{®} OS, or the like. User interface 617 may facilitate display, execution, interaction, manipulation, or operation of program components through textual or graphical facilities. For example, user interfaces may provide computer interaction interface elements on a display system operatively connected to the computer system 601, such as cursors, icons, check boxes, menus, scrollers, windows, widgets, etc. Graphical user interfaces (GUIs) may be employed, including, without limitation, APPLE^{®} MACINTOSH^{®} operating systems' AQUA^{®} platform, IBM^{®} OS/2^{®}, MICROSOFT^{®} WINDOWS^{®} (e.g., AERO^{®}, METRO^{®}, etc.), UNIX X-WINDOWS, web interface libraries (e.g., ACTIVEX^{®}, JAVA^{®}, JAVASCRIPT^{®}, AJAX^{®}, HTML, ADOBE^{®} FLASH^{®}, etc.), or the like.

In some embodiments, the computer system 601 may implement a web browser 618 stored program component. The web browser 618 may be a hypertext viewing application, such as MICROSOFT^{®} INTERNET EXPLORER^{®}, GOOGLE^{®} CHROME^{®}, MOZILLA^{®} FIREFOX^{®}, APPLE^{®} SAFARI^{®}, etc. Secure web browsing may be provided using HTTPS (secure hypertext transport protocol), secure sockets layer (SSL), Transport Layer Security (TLS), etc. Web browsers may utilize facilities such as AJAX^{®}, DHTMI,, ADOBE^{®} FLASH^{®}, JAVASCRIPT^{®}, JAVA^{®}, application programming interfaces (APIs), etc. In some embodiments, the computer system 601 may implement a mail server 619 stored program component. The mail server 619 may be an Internet mail server such as MICROSOFT^{®} EXCHANGE^{®}, or the like. The mail server 619 may utilize facilities such as ASP, ActiveX, ANSI C++/C#, MICROSOFT .NET^{®} CGI scripts, JAVA^{®}, JAVASCRIPT^{®}, PERL^{®}, PHP^{®}, PYTHON^{®}, WebObjects, etc. The mail server 619 may utilize communication protocols such as internet message access protocol (IMAP), messaging application programming interface (MAPI), MICROSOFT^{®} EXCHANGE^{®}, post office protocol (POP), simple mail transfer protocol (SMTP), or the like. In some embodiments, the computer system 601 may implement a mail client 620 stored program component. The mail client 620 may be a mail viewing application, such as APPLE MAIL^{®}, MICROSOFT ENTOURAGE^{®}, MICROSOFT OUTLOOK^{®}, MOZILLA THUNDERBIRD^{®}, etc.

In some embodiments, computer system 601 may store user/application data 621, such as the data, variables, records, etc. (e.g., the set of predictive models, the plurality of clusters, set of parameters (batch size, number of epochs, learning rate, momentum, etc.), accuracy scores, competitiveness scores, ranks, associated categories, rewards, threshold scores, threshold time, and so forth) as described in this disclosure. Such databases may be implemented as fault-tolerant, relational, scalable, secure databases such as ORACLE^{®} OR SYBASE^{®} OR POSTGRESQL^{®} OR any such similar data. Alternatively, such databases may be implemented using standardized data structures, such as an array, hash, linked list, struct, structured text file (e.g., XML), table, or as object-oriented databases (e.g., using OBJECTSTORE^{®}, POET^{®}, ZOPE^{®}, etc.). Such databases may be consolidated or distributed, sometimes among the various computer systems discussed above in this disclosure. It is to be understood that the structure and operation of the any computer or database component may be combined, consolidated, or distributed in any working combination.

Thus, the disclosed method and system try to overcome the technical problem of managing knowledge of the primary ML model. The disclosed method and system generate a set of class probabilities for an unlabelled dataset based on a labelling function. The unlabelled dataset is associated with the primary ML model, and the primary ML model employs a first ML model architecture. Further, the method and system further transfers the unlabelled dataset and the associated set of class probabilities for training a secondary ML model based on a knowledge transfer technique. The secondary ML model employs a second ML model architecture, and the first ML model architecture is different from the second ML model architecture Further, the method and system export the trained secondary ML model from the first environment to a second environment based on a privacy protection technique.

As will be appreciated by those skilled in the art, the techniques described in the various embodiments discussed above are not routine, or conventional, or well understood in the art. The techniques discussed above provide for managing knowledge of the primary ML model. The techniques use of method of knowledge distillation to use the existing production ML model (e.g., the primary ML model) along with the unlabelled production dataset as the `Production Teacher Model' in existing architecture to create `Production Student Model' (e.g., the secondary ML model) in a new architecture. The techniques further export the created `Production Student Model' to the pre-production environment in a privacy protecting manner. The techniques disclosed above in various embodiments of the present disclosure may be implemented in the enterprise systems where companies work on customer projects and have regulation around data and its privacy & security, and their model architecture keeps on changing.

In light of the above mentioned advantages and the technical advancements provided by the disclosed method and system, the claimed steps as discussed above are not routine, conventional, or well understood in the art, as the claimed steps enable the following solutions to the existing problems in conventional technologies. Further, the claimed steps clearly bring an improvement in the functioning of the device itself as the claimed steps provide a technical solution to a technical problem.

The specification has described method and system for managing knowledge of the primary ML model. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope and spirit of the disclosed embodiments.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope and spirit of disclosed embodiments being indicated by the following claims.

## Claims

1. A method for managing knowledge of a primary Machine Learning (ML) model, the method comprising:
generating, by a computing system, a set of class probabilities for an unlabelled dataset based on a labelling function, wherein the unlabelled dataset is associated with the primary ML model, and wherein the primary ML model employs a first ML model architecture; and
transferring, by the computing system, the unlabelled dataset and the associated set of class probabilities for training a secondary ML model based on a knowledge transfer technique, wherein the secondary ML model employs a second ML model architecture, and wherein the first ML model architecture is different from the second ML model architecture.

2. The method of claim 1, further comprising:
exporting the trained secondary ML model from a first environment to a second environment based on a privacy protection technique.

3. The method of claim 2, wherein the first environment is a production environment.

4. The method of claim 2, wherein the second environment is one of a pre-production environment, or a test environment.

5. The method of claim 2, wherein the privacy protection technique is one of a Fully Homomorphic Encryption (FHE) technique, a Multi-Party Computation (MPC) technique, a Trusted Execution Environments (TEEs) technique, a secure enclave technique, a secure communication channel technique, and an obfuscation technique.

6. The method of claim 1, further comprising removing a pre-assigned label from an associated labelled dataset present in the first environment to generate the unlabelled dataset.

7. The method of claim 1, wherein the knowledge transfer technique corresponds to a knowledge distillation technique.

8. The method of claim 1, wherein the labelling function corresponds to a soft max function.

9. A system for managing knowledge of a primary Machine Learning (ML) model, the system comprising:
a processing circuitry; and
a memory communicatively coupled to the processing circuitry,
wherein the memory stores processor instructions, which when executed by the processing circuitry, cause the processing circuitry to:
generate a set of class probabilities for an unlabelled dataset based on a labelling function, wherein the unlabelled dataset is associated with the primary ML model, and wherein the primary ML model employs a first ML model architecture; and
transfer the unlabelled dataset and the associated set of class probabilities for training a secondary ML model based on a knowledge transfer technique, wherein the secondary ML model employs a second ML model architecture, and wherein the first ML model architecture is different from the second ML model architecture.

10. The system of claim 9, wherein the processor instructions, on execution, further cause the processing circuitry to export the trained secondary ML model from a first environment to a second environment based on a privacy protection technique.

11. The system of claim 10, wherein the first environment is a production environment.

12. The system of claim 10, wherein the second environment is one of a pre-production environment, or a test environment.

13. The system of claim 10, wherein the privacy protection technique is one of a Fully Homomorphic Encryption (FHE) technique, a Multi-Party Computation (MPC) technique, a Trusted Execution Environments (TEEs) technique, a secure enclave technique, a secure communication channel technique, and an obfuscation technique.

14. The system of claim 1, wherein the processor instructions, on execution, further cause the processing circuitry to remove a pre-assigned label from an associated labelled dataset present in the first environment to generate the unlabelled dataset.

15. The system of claim 9, wherein the knowledge transfer technique corresponds to a knowledge distillation technique.

16. The system of claim 9, wherein the labelling function corresponds to a soft max function.

17. A non-transitory computer-readable medium storing computer-executable instructions for managing knowledge of a primary Machine Learning (ML) model, the computer-executable instructions configured for:
generating a set of class probabilities for an unlabelled dataset based on a labelling function, wherein the unlabelled dataset is associated with the primary ML model, and wherein the primary ML model employs a first ML model architecture; and
transferring the unlabelled dataset and the associated set of class probabilities for training a secondary ML model based on a knowledge transfer technique, wherein the secondary ML model employs a second ML model architecture, and wherein the first ML model architecture is different from the second ML model architecture.
